# EUROPÄISCHE PATENTSCHRIFT

(11) **EP 2 197 328 B1**
(45) Veröffentlichungstag und Bekanntmachung des Hinweises auf die Patenterteilung: **14.12.2011**
(21) Anmeldenummer: 08783469.3
(22) Anmeldetag: 03.09.2008
(51) Int. Cl.: A47J 31/54, A47J 31/56, H05B 3/42, H05B 3/82

(54) **BOILER FÜR KAFFEEMASCHINEN ZUM ERWÄRMEN VON WASSER**
BOILER FOR HEATING WATER IN COFFEE MACHINES
CHAUDIÈRE POUR FAIRE CHAUFFER L'EAU DANS DES MACHINES À CAFÉ

(30) Priorität: 08.10.2007 CH 15572007
(43) Veröffentlichungstag der Anmeldung: 23.06.2010
(73) Patentinhaber: Egro Coffee Systems AG, 5443 Niederrohrdorf (CH)
(72) Erfinder: ANLIKER, Markus, CH-5722 Gränichen (CH)
(74) Vertreter: Robba, Pierpaolo
(86) Internationale Anmeldenummer: PCT/CH2008/000369
(87) Internationale Veröffentlichungsnummer: WO 2009/046550

(56) Entgegenhaltungen:
- WO-A-2008/098391
- DE-A1- 2 552 625

## Beschreibung

Die vorliegende Erfindung betrifft einen Boiler für Kaffeemaschinen zum Erwärmen von Wasser gemäss dem Oberbegriff des Anspruchs 1.

Derartige Boiler werden in der Praxis bei Kaffee- und Espressomaschinen insbesondere bei gewerblich genutzten Maschinen verwendet. Der Boiler besteht aus einem geschlossenen, druckfesten meist zylindrischen Behälter mit einem Kaltwasserzulauf und einem Heisswasserablauf und einem Rohrheizkörper im Inneren des Behälters in Form einer stehend angeordneten Heizspirale. Das im Boiler befindliche Wasser wird auf die zum Brühen des Kaffees notwendige Temperatur aufgeheizt und ist mit einem Druck von der Grössenordnung von etwa 10 bar beaufschlagt. Bei der Zubereitung eines Getränks wird dem Boiler heisses Wasser entnommen und gleichzeitig fliesst die gleiche Menge kaltes Wasser nach. Dadurch sinkt die Wassertemperatur im Boiler. Die im Boiler angeordnete Heizung sorgt für die rasche Aufheizung des Wasser, so dass die Kaffeemaschine in kurzer Zeit wieder Betriebsbereit ist, das heisst, dass das nächste Getränk zubereitet werden kann. Bei gewerblich genutzten Maschinen wird erwartet, dass unmittelbar nach der Fertigstellung eines Getränks das nächste Getränk zubereitet werden kann. Die Zykluszeit ergibt sich somit aus der Brüh- und Kaffeebereitstellungs- und Kaffeeauswurfsphase der Kaffeemaschine. Die Aufheizzeit sollte diese Zykluszeit nicht verlängern. Um das zu erreichen werden in den Boilern Heizelemente mit möglichst hoher elektrischer Leistung eingesetzt. Der Nachteil der Heizelemente mit hoher Heizleistung ist, dass die Energiedichte am Heizkörper sehr gross ist und die Wärme gar nicht rasch genug vom Heizelement an die gesamte Wassermenge abgegeben werden kann. Die Windungen des Rohrheizkörpers liegen nahe nebeneinander, so dass sie sich gegenseitig beeinflussen, d.h. dass beim Erhitzen des Rohrheizkörpers die Wärme nicht nur an das Wasser sondern auch an die unmittelbar benachbarten Windungen abgegeben wird. Häufig führt das zu lokalen Überhitzungen mit Dampfbläschenbildung, was teilweise als leises Zischen sogar hörbar ist. An den Stellen, wo eine solche lokale Überhitzung auftritt, ist der Wärmeübergang zwischen Rohrheizkörper und Wasser wegen der Dampfbläschen schlechter als ohne Bläschenbildung, was insgesamt zu einer Reduktion des Wirkungsgrades der Heizanordnung führt.

Es ist Aufgabe der vorliegenden Erfindung, einen Boiler für Kaffeemaschinen zum Erwärmen von Wasser bereitzustellen, der die genannten Nachteile traditioneller Vorrichtungen vermeidet.

Die vorstehende Aufgabe wird von einem Boiler mit den Merkmalen des Anspruchs 1 gelöst. Weitere Merkmale und Vorteile der vorliegenden Erfindung werden an Hand der folgenden Beschreibung eines bevorzugten Ausführungsbeispiels insbesondere unter Bezugnahme der beigefügten Zeichnungen erläutert.

Es zeigt die
- Figur 1: eine perspektivische Darstellung des Boilergehäuses mit durchscheinendem Gehäusemantel;
- Figur 2: eine perspektivische Darstellung des Boilerbodens mit der Heizanordnung von innen gesehen;
- Figur 3: den Boilerboden mit montierter Heizanordnung in einer Ansicht in Richtung Boilerachse;
- Figur 4: eine perspektivische Darstellung des Boilerbodens mit der Heizanordnung von aussen gesehen;
- Figur 5: eine schematische Schnittzeichnung durch einen steckbaren Wasseranschluss.

Das Prinzip des erfindungsgemässen Boilers liegt darin, dass mit einer entsprechend gestalteten Heizanordnung und einem isolierten Boilergehäuse mit geringerer elektrischer Energie als bei herkömmlichen, vergleichbaren Kaffeemaschinen in gleicher Zeit die benötigte Heisswassermenge bereit gestellt wird. Die durch vorzugsweise einen Rohrheizkörper gebildete Heizanordnung erstreckt sich nahezu über das gesamte Volumen des Boilers, wodurch die Wärme möglichst gleichzeitig und gleich verteilt über das gesamte Volumen an das Wasser abgegeben wird und keine lokalen Überhitzungen mit Dampfbildung entstehen können. Stellt man sich das Gesamtvolumen in kleine Einzelzellen aufgeteilt vor, so hat jeder Abschnitt des Rohrheizkörpers eine etwa gleich grosse Anzahl von Zellen, die den Heizkörper unmittelbar umgeben bzw. das gleiche Teilvolumen des Boilers, gleichzeitig aufzuheizen. Die zeitliche Verzögerung der Aufheizung des Wassers durch Konvektion für vom Heizkörper weiter entfernten Zellen, wie das bei üblichen Heizungsanordnungen der Fall ist, wird dadurch stark reduziert. Die Windungen des Rohrheizkörpers sind derart angeordnet, dass sie sich gegenseitig nicht mehr beeinflussen und beim Erhitzen des Rohrheizkörpers die Wärme nahezu nur an das Wasser abgegeben wird.

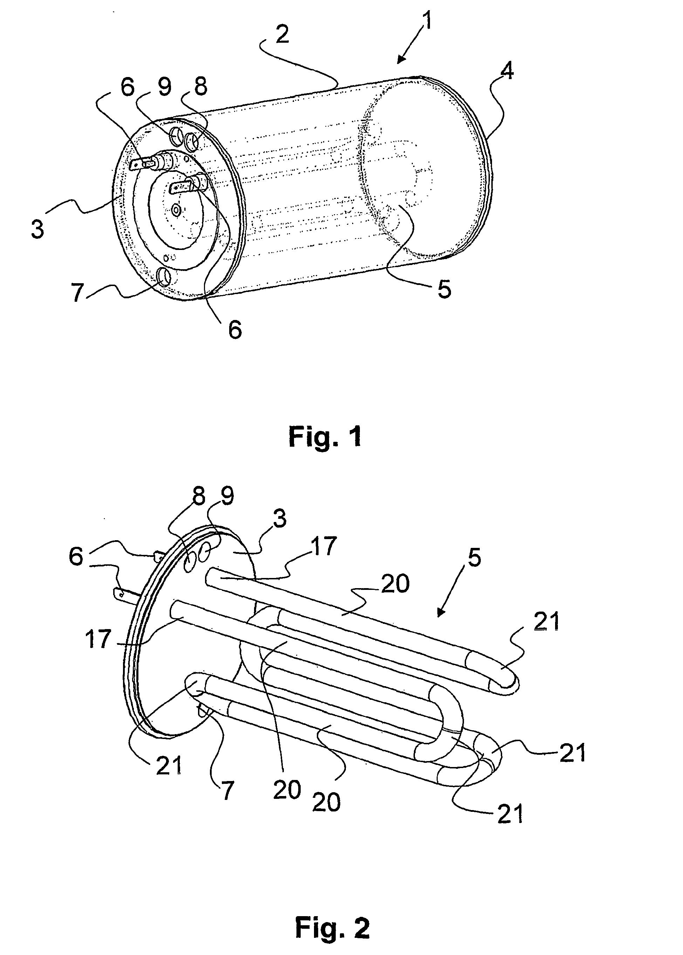

In der Figur 1 ist eine beispielsweise Ausführung des erfindungsgemässen Boilers 1 schematisch in einer perspektivischen Darstellung gezeigt. Das zylinderförmige druckfeste und aus rostfreiem Stahl gefertigte Boilergehäuse 1 mit einem Fassungsvermögen von etwa 1 l bis 2 l besteht aus einem Boilermantel 2 und aus den mit dem Mantel 2 verschweissten Seitenflächen, die senkrecht zur Zylinderachse angeordnet sind. Der Mantel 2 ist durchscheinend dargestellt, so dass im Inneren des Boilers 1 der Rohrheizkörper 5 zu erkennen ist. Die eine Seitenfläche des Boilergehäuses 1 bildet den Boilerdeckel 4 und die zweite Seitenfläche den Boilerboden 3 mit den Durchführungen für den Kaltwasseranschluss 7, für den Heisswasserabfluss 8, für einen Thermofühler 9 und den elektrischen Anschlüssen 6 für den Rohrheizkörper 5. Der Boiler 1 ist für einen horizontalen Betrieb ausgelegt, dass heisst, dass die Zylinderachse eines in eine Kaffeemaschine eingebauten Boilers 1 horizontal verläuft, und der zur Zylinderachse A senkrecht angeordnete Boilerboden 3 vertikal verläuft. Der Boilerboden 3 ist weiter so ausgerichtet, dass die Kaltwasserzuleitung 7 im unteren Bereich unterhalb der tiefstliegenden Schleife des Rohrheizkörpers 5 und die Heisswasserabflussleitung 8 im oberen Bereich des Boilerbodens 3 oberhalb der Anschlüsse 6 für den Rohrheizkörper 5 angeordnet sind. Unmittelbar neben dem Anschluss für die Heisswasserabflussleitung 8 ist eine Durchführung 9 für einen Thermofühler vorgesehen, der in das Innere des Boilergehäuses 1 ragt und zum Messen und Regeln der Wassertemperatur bestimmt ist.

Die Figur 2 zeigt in einer perspektivischen Darstellung den Boilerboden 3 mit montiertem Rohrheizkörper 5. Der Rohrheizkörper 5 ist derart gestaltet, dass jeder Punkt innerhalb des Behältervolumens maximal einen Normalabstand vom Rohrheizkörper von 40% des Behälterdurchmessers D, vorzugsweise etwa 1/3 des Behälterdurchmessers D aufweist. Der Rohrheizkörper 5 besteht aus sechs in einem Abstand d von vorzugsweise etwa 1/3 des Behälterdurchmessers D parallel zur Zylinderachse A des Boilers 1 verlaufenden Abschnitten 20, die je eine Länge aufweisen, die grösser als 75% der Längsausdehnung des Boilergehäuses ist, und die einen Normalabstand d zu ihren benachbarten parallelen Abschnitten 20 von ebenfalls vorzugsweise etwa 1/3 des Behälterdurchmessers D aufweisen. Die Abstände d können aber zwischen 28% und 38% des Behälterdurchmessers D variieren, haben aber bevorzugt eine Länge von 1/3 des Behälterdurchmessers D. Der Rohrheizkörper 5 ist mit den im Boilergehäuse 1 zu oberst angeordneten und parallel zur Zylinderachse A verlaufenden Endabschnitten 17 am vertikal verlaufenden Boilerboden 3 befestigt. Über diese Befestigung werden die elektrischen Verbindungen des Heizkörpers 5 isoliert nach aussen zu den Anschlüssen 6 geführt. Herstellungsbedingt sind die Endabschnitte 17 des Rohrheizkörpers 5 nicht beheizt. Der Rohrheizkörper 5 ist so gestaltet, dass jeweils an den Enden der parallelen Abschnitte 20 ausser an den Endabschnitten 17 eine halbkreisförmige Krümmung 21 folgt die in den nächsten parallel verlaufenden Abschnitt 20 des Rohrheizkörpers 5 überführt.

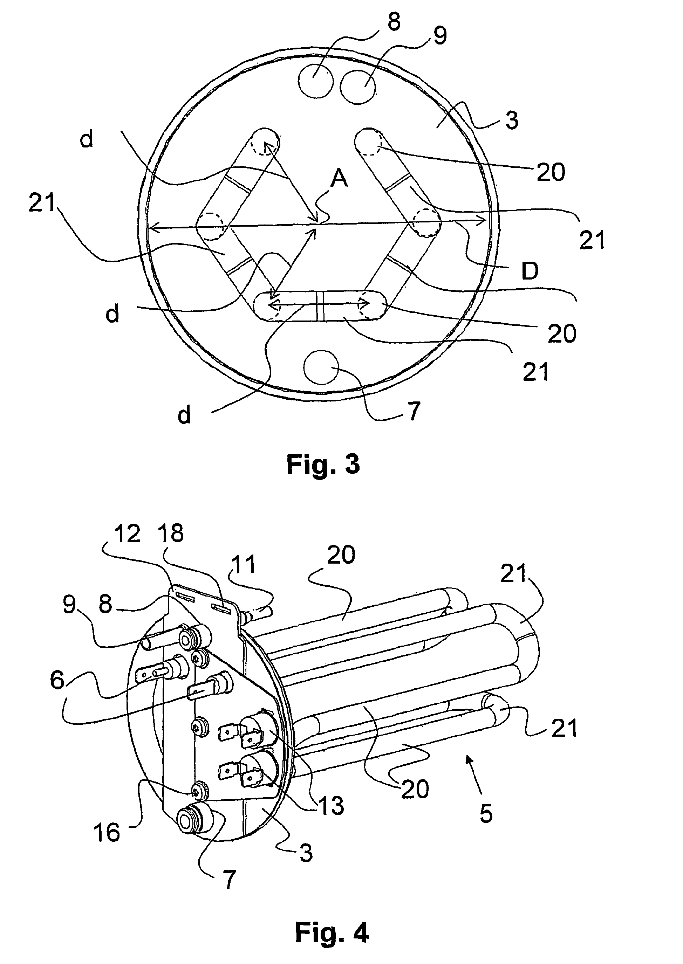

Anhand der Figur 3, welche den Boilerboden 3 mit montiertem Rohrheizkörper 5 in einer Ansicht in Richtung Boilerachse A zeigt, ist die geometrische Anordnung der parallel zur Boilerachse A verlaufenden Abschnitte 20 und der halbgreisförmigen Krümmungen 21 zu erkennen. Die parallel zur Boilerachse A verlaufenden Abschnitte 20 weisen einen Normalabstand d sowohl zu den benachbarten parallelen Abschnitten 20 wie auch zur Achse A von jeweils einem Drittel des Innendurchmessers D des Boilerbehälters 1 auf. Weiter sind die Durchführungsöffnungen für den Kaltwasseranschluss 7 im untersten Bereich des Boilerbodens 3, für den Heisswasserabfluss 8 und für den Thermofühler 9 im obersten Bereich des Boilerbodens 3 oberhalb der Heizungsanschlüsse 6 zu erkennen.

In der Figur 4 ist der Boilerboden 3 mit montiertem Rohrheizkörper 5 in einer perspektivischen Darstellung von aussen gesehen gezeigt. Die Anschlüsse für die Durchführungen 7 für das Kaltwasser und für den Heisswasserabfluss 8 und für den Thermofühler 11 sind steckbar und werden von einer Halteplatte 12, die am Boilerboden 3 mit den Schrauben 16 befestigt ist, gehalten. Das Prinzip der steckbaren Anschlüsse wird anhand der Zeichnung 5 gezeigt. Weiter sind zwei mit einer Halteplatte 14 gehaltene Schutzschalter 13 zu erkennen, die elektrisch mit dem Heizstromkreis verbunden sind, und diesen bei einer Überhitzung des Boilers unterbrechen. Die Schlitze 18 im oberen Bereich der Halteplatte 12 sind für eine hängende, horizontale Montage des Boilers 1 in einer Kaffeemaschine vorgesehen.

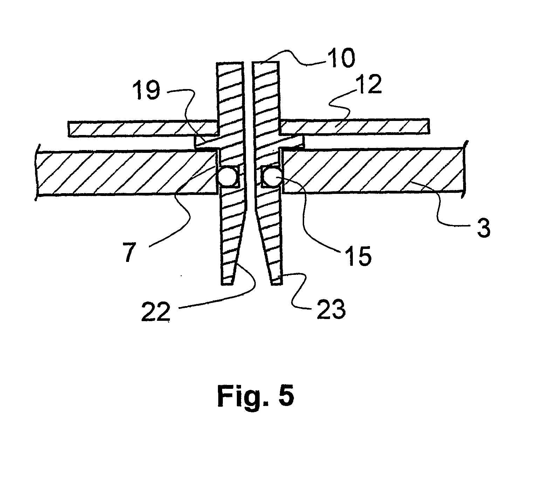

Die Figur 5 zeigt eine schematische Schnittzeichnung durch einen steckbaren Wasseranschluss der dichtend in die Durchführungen der Kaltwasserzuführung 7 und in die Heisswasserabfluss-Durchführung 8 einsteckbar und von der Halteplatte 12 gehalten ist. Der rohrförmige Anschluss 10 weist eine Ringnut zur Aufnahme eines Dichtungselements 15 sowie eine oberhalb der Ringnut angeordnete kragenförmige Erweiterung 19 auf. Beim in den Boilerboden 3 eingesteckten Anschluss 10 kommt das Dichtungselement 15 innerhalb der Durchführung 7,8 zu liegen und dichtet diese ab. Die kragenförmige Erweiterung 19 dient als Anschlag und liegt auf der Oberfläche des Boilerbodens 3 auf. Die Halteplatte 12 wird mit entsprechenden, beispielsweise schlüssellochförmigen Ausnehmungen über die Durchführungen 10 gesteckt und mit dem Boilerboden 3 verschraubt. Dadurch sind die Anschlüsse gewindelos in den Durchführungen 7,8,9 fest und dichtend gehalten und erlauben eine einfache Montage und Demontage im Servicefall. Der Anschluss für den Thermofühler 11 erfolgt analog zu den Wasseranschlüssen. Der in das Innere des Boilers 1 ragende Fortsatz 23 des Kaltwasseranschlusses 10 weist zur Verbesserung der Einströmeigenschaften des zufliessenden Kaltwassers eine konische Erweiterung des Innendurchmessers 22 gegen das Ende des Fortsatzes 23 auf. Am äusseren Ende des Anschlusses 10 ist nach bekannter Art eine Kaltwasser- bzw. Heisswasserleitung in Form eines Rohres oder Schlauchs angeschlossen.

Der Boilermantel und die Seitenflächen sind mit einer thermisch isolierenden Schicht umhüllt, um eine Wärmeabgabe nach aussen möglichst zu unterbinden. Als Material für den Boiler ist Chromstahl vorgesehen, wobei der Boilermantel 2 mit den Seitenwänden 3,4 verschweisst ist. Als Material für den Boiler kommen aber auch Materialien als Chromstahl in Frage wie beispielsweise Kunststoff.

Mit dem erfindungsgemässen Boiler 1 kann mit geringerer elektrischer Anschlussleistung als bei herkömmlichen, vergleichbaren Kaffeemaschinen die benötigte Heisswassermenge zur Zubereitung von Getränken bereit gestellt werden. Der Rohrheizkörper 5 erstreckt sich nahezu über das gesamte Volumen des Boilers 1, wodurch die Wärme gleichmässig verteilt über das gesamte Volumen an das Wasser abgegeben wird. Bei der Entnahme von Wasser für die Zubereitung eines Getränkes von etwa 200 ml strömt gleichzeitig die gleiche Menge kaltes Wasser nach und erwärmt sich bis zur Zubereitung des nächsten Getränkes soweit, dass auch bei der nächstfolgenden Heisswasserentnahme das Wasser die erforderliche Temperatur hat. Es hat sich gezeigt, dass bei einer unmittelbar aufeinander folgenden Entnahme von zwanzig und mehr Portionen an Wasser zur Zubereitung eines Kaffeegetränks die Temperatur des entnommenen Wassers konstant ist und die voreingestellten Temperatur aufweist. Das heisst, dass mit dem erfindungsgemässen Boiler bei den entnommenen Wassermengen keine Temperaturschwankungen durch das Ein- und Ausschalten des Heizungssystems auftreten und dass der bekannte Effekt der Temperatur Hysterese nicht erkennbar ist. Dadurch kann mit dem erfindungsgemässen Boiler sehr präzise die gewünschte Brühtemperatur voreingestellt werden.

## Patentansprüche

1. Boiler für Kaffee- und Espressomaschinen zum Erwärmen von Wasser umfassend ein Boilergehäuse (1), einen Kaltwasserzufluss (7) und einen Heisswasserabfluss (8) sowie eine elektrische Heizeinrichtung (5), die in das Innere des Boilergehäuses (1) hineinragt, **dadurch gekennzeichnet, dass** das Boilergehäuse (1) eine zylindrische Form mit einem Boilermantel (2), einem Boilerdeckel (4) und einem Boilerboden (3) mit einer im Betrieb horizontal ausgerichteten Zylinderachse (A) aufweist, dass weiter die Kaltwasserzuleitung (7) sowie der Heisswasserabfluss (8) und die elektrische Heizeinrichtung (5) an einem vertikal verlaufenden Boilerboden (3) des Boilergehäuses (1) montiert sind, dass weiter die Heizeinrichtung (5) derart gestaltet ist, dass jeder Punkt innerhalb des Behältervolumens einen Normalabstand von der Heizeinrichtung (5) von weniger als 40% des Behälterdurchmessers (D) aufweist.

2. Boiler nach Anspruch 1, **dadurch gekennzeichnet, dass** die Heizeinrichtung (5) von einem Rohrheizkörper (5) gebildet ist, welcher Rohrheizkörper (5) sechs parallel zur Zylinderachse (A) des Boilers (1) verlaufende Abschnitte (20) mit einen Normalabstand (d) sowohl zu den benachbarten parallelen Abschnitten (20) wie auch zur Achse (A) von jeweils etwa einem Drittel des Innendurchmessers (D) des Boilerbehälters (1) aufweist, und dass diese Abschnitte (20) je eine Länge aufweisen, die grösser als 70% der Längsausdehnung des Boilergehäuses (1) ist.

3. Boiler nach Anspruch 1 oder 2, **dadurch gekennzeichnet, dass** der Rohrheizkörper (5) mit den im Boilergehäuse (1) zu oberst angeordneten und parallel zur Zylinderachse (A) verlaufenden Abschnitten (17) am Boilerboden (3) befestigt und über diese Befestigung die elektrische Verbindung des Rohrheizkörpers (5) nach aussen isoliert geführt ist.

4. Boiler nach einem der vorhergehenden Ansprüche, **dadurch gekennzeichnet, dass** die Kaltwasserzuleitung (7) im unteren Bereich des vertikal verlaufenden Boilerbodens (3) und der Heisswasserabfluss (8) im oberen Bereich des Boilerbodens (3) angeordnet sind.

5. Boiler nach einem der vorhergehenden Ansprüche, **dadurch gekennzeichnet, dass** im Bereich der Heisswasserabflusses (8) ein Temperaturfühler (9) am Boilerboden (3) angeordnet ist, der in das Innere des Boilergehäuses (1) ragt.

6. Boiler nach einem der vorhergehenden Ansprüche, **dadurch gekennzeichnet, dass** die Anschlüsse für das Kaltwasser und für das Heisswasser steckbar sind.

7. Boiler nach Anspruch 5, **dadurch gekennzeichnet, dass** der Temperaturfühler (11) steckbar ist.

8. Boiler nach einem der vorhergehenden Ansprüche, **dadurch gekennzeichnet, dass** wenigstens ein thermischer Schutzschalter (13) am Boilergehäuse (1) angeordnet ist.

9. Boiler nach einem der vorhergehenden Ansprüche, **dadurch gekennzeichnet, dass** das Boilergehäuses (1) mit einer thermisch isolierenden Schicht umhüllt ist.

10. Boiler nach einem der vorhergehenden Ansprüche, **dadurch gekennzeichnet, dass** das Boilergehäuses (1) aus Kunststoff gefertigt ist.

## Claims

1. A boiler for heating water in coffee and espresso machines, comprising a boiler housing (1), a cold water inlet (7) and a hot water outlet (8) as well as an electric heating device (5) projecting inside the boiler housing (1), **characterised in that** the boiler housing (1) has a cylindrical shape with a boiler shell (2), a boiler cover (4) and a boiler base (3) having a cylinder axis (A) that is horizontal when in operation, **in that** moreover the cold water inlet duct (7) as well as the hot water outlet (8) and the electric heating device (5) are mounted on a vertically extending boiler base (3) of the boiler housing (1), **in that** moreover the heating device (5) is configured in such a manner that each point inside the container volume is at a normal distance from the heating device (5) that is less than 40% of the container diameter (D).

2. The boiler as claimed in claim 1, **characterised in that** the heating device (5) is made of a tubular heating body (5), which tubular heating body (5) comprises six sections (20) that extend parallel to the cylinder axis (A) of the boiler (1) and are at a normal distance (d) of about one third of the internal diameter (D) of the boiler container (1) from both the adjacent parallel sections (20) and the axis (A), and **in that** each such section (20) has a length that exceeds 70% of the longitudinal extension of the boiler housing (1).

3. The boiler as claimed in claim 1 or 2, **characterised in that** the tubular heating body (5) is fastened with the sections (17), that are arranged on top and extend parallel to the cylinder axis (A) in the boiler housing (1), to the boiler base (3), and the electrical connection of the tubular heating body (5) is brought insulated to the outside through such fastening.

4. The boiler as claimed in any preceding claim, **characterised in that** the cold water inlet duct (7) is arranged in the lower part of the vertically extending boiler base (3) and the hot water outlet (8) is arranged in the upper part of the boiler base (3).

5. The boiler as claimed in any preceding claim, **characterised in that** a temperature sensor (11), projecting inside the boiler housing (1), is arranged on the boiler base (3) in the region of the hot water outlet (8).

6. The boiler as claimed in any preceding claim, **characterised in that** the connections for the cold water and the hot water are pluggable.

7. The boiler as claimed in claim 5, **characterised in that** the temperature sensor (11) is pluggable.

8. The boiler as claimed in any preceding claim, **characterised in that** at least one thermal protection switch (13) is arranged on the boiler housing (1).

9. The boiler as claimed in any preceding claim, **characterised in that** the boiler housing (1) is sheathed with a thermally insulating layer.

10. The boiler as claimed in any preceding claim, **characterised in that** the boiler housing (1) is made of plastics.

## Revendications

1. Bouilloire pour machines à café et expresso destinée à chauffer de l'eau, ladite bouilloire comportant un boîtier de bouilloire (1), une entrée d'eau froide (7) et une sortie d'eau chaude (8) ainsi qu'un dispositif de chauffage électrique (5) qui fait saillie à l'intérieur du boîtier de bouilloire (1), **caractérisée en ce que** le boîtier de bouilloire (1) a une forme cylindrique présentant une enveloppe de bouilloire (2), un couvercle de bouilloire (4) et un fond de bouilloire (3) avec un axe de cylindre (A) orienté horizontalement en fonctionnement, **en ce que** l'entrée d'eau froide (7) ainsi que la sortie d'eau chaude (8) et le dispositif de chauffage (5) sont en outre montés sur un fond de bouilloire (3), s'étendant verticalement, du boîtier de bouilloire (1), **en ce que** le dispositif de chauffage (5) est en outre conformé de telle sorte que chaque point à l'intérieur du volume de réservoir se trouve a une distance normale du dispositif de chauffage (5) de moins de 40% du diamètre (D) de la bouilloire.

2. Bouilloire selon la revendication 1, **caractérisée en ce que** le dispositif de chauffage (5) est formé d'un corps de chauffage tubulaire (5), lequel corps de chauffage tubulaire (5) possède six portions (20) s'étendant parallèlement à l'axe de cylindre (A) de bouilloire (1) à une distance normale (d), aussi bien par rapport aux portions parallèles adjacentes (20) que par rapport à l'axe (A), d'environ un tiers du diamètre intérieur (D) du boîtier de bouilloire (1), et **en ce que** ces portions (20) ont chacune une longueur qui est supérieure à 70% de l'extension longitudinale du boîtier de bouilloire (1).

3. Bouilloire selon la revendication 1 ou 2, **caractérisée en ce que** le corps de chauffage tubulaire (5) est fixé avec les portions (17), qui sont disposés en haut et qui s'étendent parallèlement à l'axe de cylindre (A) dans le boîtier de bouilloire (1), au fond de bouilloire (3) et **en ce que** la liaison électrique du corps de chauffage tubulaire (5) est guidée de façon isolée vers l'extérieur par cette fixation.

4. Bouilloire selon l'une des revendications précédentes, **caractérisée en ce que** l'entrée d'eau froide (7) est disposée dans la région inférieure du fond de bouilloire (3) qui s'étend verticalement et la sortie d'eau chaude (8) est disposée dans la région supérieure du fond de bouilloire (3).

5. Bouilloire selon l'une des revendications précédentes, **caractérisée en ce que** dans la région de la sortie d'eau chaude (8) un capteur de température (11) est disposé au niveau du fond de bouilloire (3) qui fait saillie à l'intérieur du boîtier de bouilloire (1).

6. Bouilloire selon l'une des revendications précédentes, **caractérisée en ce que** les raccords d'eau froide et d'eau chaude sont enfichables.

7. Bouilloire selon la revendication 5, **caractérisée en ce que** le capteur de température (11) est enfichable.

8. Bouilloire selon l'une des revendications précédentes, **caractérisée en ce qu'**au moins un disjoncteur thermique (13) est disposé au niveau du boîtier de bouilloire (1).

9. Bouilloire selon l'une des revendications précédentes, **caractérisée en ce que** le boîtier de bouilloire (1) est entouré d'une couche thermiquement isolante.

10. Bouilloire selon l'une des revendications précédentes, **caractérisée en ce que** le boîtier de bouilloire (1) est fabriqué à partir d'une matière synthétique.
